(19) Europäisches Patentamt
European Patent Office
Office européen des brevets

(11) Veröffentlichungsnummer : **0 036 081**
**B1**

(12) # EUROPÄISCHE PATENTSCHRIFT

(45) Veröffentlichungstag der Patentschrift : **18.01.84**

(51) Int. Cl.$^3$ : **C 09 B 29/08**, C 09 B 31/04, C 09 B 43/42

(21) Anmeldenummer : **81101054.5**

(22) Anmeldetag : **14.02.81**

(54) **Azofarbstoffe sowie deren Herstellung und Verwendung zum Färben von Synthesefasern.**

(30) Priorität : **01.03.80 DE 3007933**

(43) Veröffentlichungstag der Anmeldung : **23.09.81 Patentblatt 81/38**

(45) Bekanntmachung des Hinweises auf die Patenterteilung : **18.01.84 Patentblatt 84/03**

(84) Benannte Vertragsstaaten : **CH DE FR GB IT LI**

(56) Entgegenhaltungen :
**DE-A- 2 434 533**
**DE-A- 2 916 137**
**FR-A- 2 125 546**
**FR-A- 2 318 205**
**GB-A- 2 030 590**
**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **Leverenz, Klaus, Dr.**
**Heymannstrasse 44**
**D-5090 Leverkusen 1 (DE)**
Erfinder : **Hamprecht, Rainer, Dr.**
**Im Kerberich 25**
**D-5068 Odenthal (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 036 081 B1

Azofarbstoffe sowie deren Herstellung und Verwendung zum Färben von Synthesefasern

Gegenstand der Erfindung sind Dispersionsazofarbstoffe der Formel

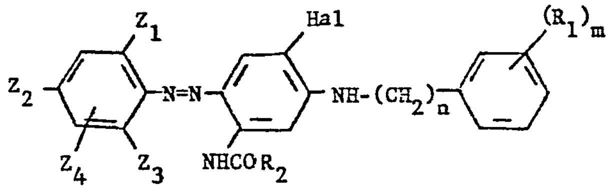

(I)

worin

$n$ und $m$ die Zahlen 1, 2 oder 3,

$Z_1$-$Z_4$ Wasserstoff, Alkyl, Cycloalkyl, Aralkyl, Halogen, $-CN$, $-NO_2$, $-CF_3$, $-SO_2Q$, $SO_2NVW$, $-COW$, $-CONVW$, $-CO_2W$, $-OQ$, $-NVW$, $-NWCOW$, $-NWSO_2Q$, $-NHCO_2Q$,

$Z_2$ außerdem Arylazo,

$Z_3$ mit $Z_4$ gemeinsam die restlichen Glieder eine ankondensierten Heterocyclus, wie

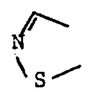

oder

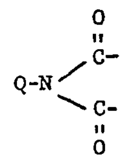

bilden können, wobei

Q Alkyl, Aralkyl oder Aryl,

V H, Alkyl oder Aralkyl und

W V oder Aryl bedeuten,

$R_1$ Alkyl, Cycloalkyl, Halogen oder Wasserstoff,

$R_2$ Wasserstoff, $R_3$ $OR_3$ oder $NHR_3$,

$R_3$ gegebenenfalls substituiertes Alkyl, Alkenyl, Aryl oder Hetaryl bedeuten,

wobei die vorstehend genannten Alkylreste 1-10 C-Atome aufweisen und durch Phenyl, Halogen, CN, Alkoxy, OH substituiert sein können, die Alkoxyreste 1-4 C-Atomen aufweisen, die Alkenylreste 3-5 C-Atome aufweisen, die Aralkylreste Phenyl-$C_1C_4$-alkylreste sind, die Arylreste Phenylreste sind, die 1-4fach durch Halogen, Alkoxy oder Alkyl, sowie 1-2fach durch $NO_2$, CN, $SO_2Q$, $SO_2NVW$, COW, $CO_2Q$, Aryl, Aryloxy, NVW oder Arylazo substituiert sein können, Hal für F, Cl oder Br steht und die Verbindung der Formel

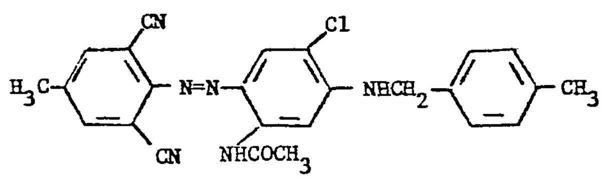

ausgenommen ist.

Vorzugsweise steht $R_2$ für Alkyl.

Bevorzugte Farbstoffe sind solche der Formel I, worin

m für die Zahl 1,

Hal für Cl oder Br,

$R_1$ für H, $CH_3$, Cl,

$R_2$ für n-$C_1$-$C_4$-Alkyl,

$Z_1$ H, $-NO_2-$, $-CN$, $-Cl$, $-Br$, $-SO_2-C_1$-$C_4$-Alkyl, $CF_3$ oder $-CO_2-C_1$-$C_4$-Alkyl,

$Z_2$ $Z_1$, $C_1$-$C_4$-Alkyl oder Phenylazo,

$Z_3$ $Z_1$ oder H,

$Z_4$ H, $C_1$-$C_2$-Alkyl oder Cl bedeuten.

Besonders bevorzugte Farbstoffe entsprechen der Formel

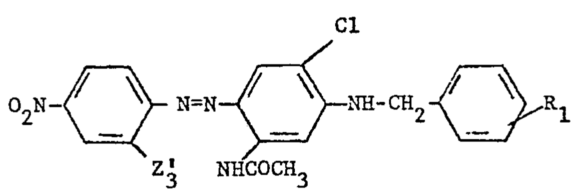

(II)

worin

$R_1$ H, $CH_3$ oder Cl und

$Z_3'$ H, Cl, $NO_2$, CN, $—CO_2$-Alkyl ($C_1$-$C_4$)

bedeuten.

Ganz besonders bevorzugt sind Farbstoffe der Formel

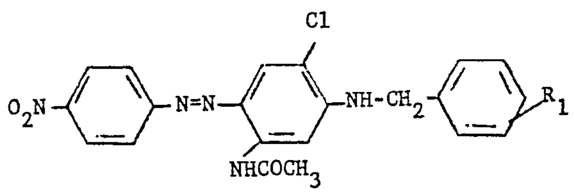

(III)

worin

$R_1$ = H, $CH_3$, Cl.

Zur Herstellung der Farbstoffe der Formel I diazotiert man beispielsweise aromatische Amine der Formel

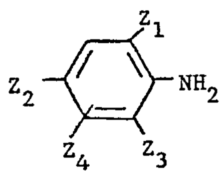

(IV)

und kuppelt mit Verbindungen der Formel

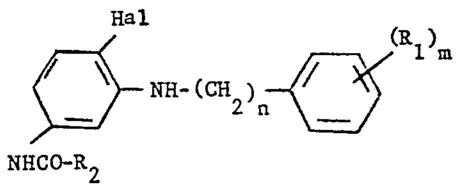

(V)

Diazotierung und Kupplung werden nach üblichen, in der Farbstoffchemie bekannten Verfahren ausgeführt (vgl. z. B. DE-A-26 32 203).

Zur Darstellung von Farbstoffen der Formel I, die in o-Stellung der Diazokomponente eine oder zwei Cyangruppen tragen, stellt man vorzugsweise erst durch Kupplung diazotierter Aniline der Formel

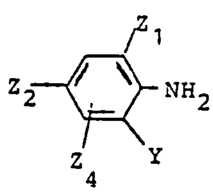

(VI)

worin

$Z_1$-$Z_4$ die vorbeschriebene Bedeutung haben und

Y Cl, Br oder J bedeutet auf Kupplungskomponenten der Formel V die entsprechenden o-Halogenazofarbstoffe

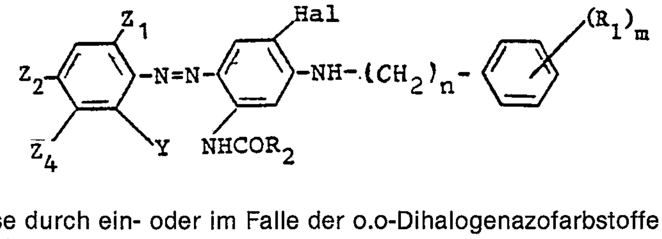

(VII)

her und überführt diese durch ein- oder im Falle der o.o-Dihalogenazofarbstoffe zweimalige nukleophile Substitution mit Cyaniden in die Farbstoffe der Formel VII, worin Y und bei zweimaligem Austausch auch $Z_1$ Cyan bedeuten und im übrigen $Z_1$, $Z_2$, $Z_4$, Hal, $R_1$ und $R_2$ die vorgenannte Bedeutung haben.

Auch diese Verfahren sind allgemein bekannt, vergl. z. B.

US-A-3 627 752
US-A-3 772 268
US-A-3 821 195
US-A-3 876 621
US-A-3 978 040
US-A-4 045 430
GB-A-1 184 825

und auch auf heterocyclische Azofarbstoffe übertragbar, z. B. zur Darstellung von o-Cyan-pyrazolyl-azofarbstoffen gemäß DE-A-27 27 268.

Bevorzugt einzusetzende Cyanide sind CuCN gegebenenfalls in Mischung mit Zinkcyaniden sowie komplexe Cu-I-cyanide. Nach analogen Verfahren können weiterhin in Farbstoffe der Formel VII worin $Z_1$-$Z_4$, Hal, $R_1$ und $R_2$ die vorbeschriebene Bedeutung haben und Y, Cl, Br, J bedeutet, durch ein- oder zweimaligen Halogen-Nitrit- oder Halogen-Sulfinat-austausch ein oder zwei Nitrogruppen oder Sulfongruppen unter Substitution von y und bei gegebenenfalls $Z_1$ eingeführt werden.

Auch die Diazokomponenten sind allgemein bekannt (vgl. z. B. BE-A-643 774, BE-A-660 461).

Geeignete Diazokomponenten sind beispielsweise

2-Chlor-4-nitro-anilin
2-Cyan-4-nitro-anilin
2,4-Dinitro-anilin
2,4-Dicyan-anilin
4-Nitro-anilin
2-Nitro-anilin
2-Amino-5-nitro-benzoesäuremethylester
2,6-Dibrom-4-methyl-anilin
2,6-Dibrom-4-methoxy-anilin
2,4,6-Tribrom-anilin
2,4,6-Trichloranilin
2,6-Dibrom-4-trifluormethylanilin
2-Trifluormethyl-4-nitro-anilin
2-Brom-4-nitro-anilin
2,6-Dibrom-4-nitro-anilin
2,6-Dibrom-4-phenylazo-anilin
2-Brom-4,6-dinitro-anilin
2-Chlor-4,6-dinitro-anilin
2-Methylsulfonyl-4-nitro-anilin
2-Methylsulfonyl-4-nitro-6-brom-anilin
2-Cyan-4,6-dinitro-anilin
2,4-Bis-Methylsulfonyl-anilin
2-Chlor-4-nitro-6-cyan-anilin
2-Chlor-4-methylsulfonyl-anilin
2-Amino-5-nitro-benzoesäure-2'-methoxyethylester
2,6-Dibrom-4-Chlor-anilin.

Die Kupplungskomponenten erhält man z. B. dadurch, daß man Halogen-m-phenylen-diamine der Formel VIII

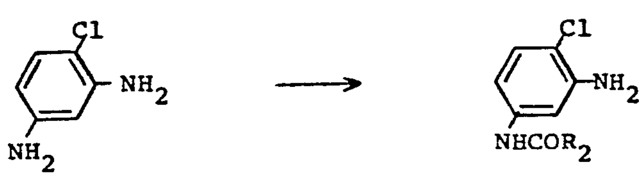

(VIII) (IX)

in protischen oder aprotischen Lösungsmitteln, mit Säurehalogeniden der Formel $R_2CO$—Hal oder Anhydriden der Formel $R_2COOCOR_2$ in die Amide IX überführt und dann mit Verbindungen der Formel

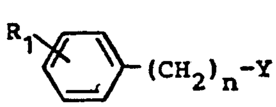

(Y = Halogen oder 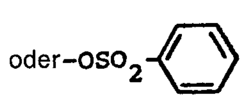 ) zu V alkyliert.

Eine weitere Möglichkeit zur Darstellung der Kupplungskomponenten V bietet die reduktive Alkylierung von IX mit Aldehyden der Formel

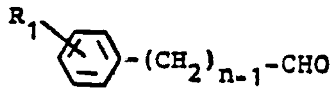

in Gegenwart von Hydrier-Katalysatoren wie z. B. Raney-Nickel oder Platin/A-Kohle.

Die neuen Farbstoffe unterscheiden sich von den strukturell ähnlichen Farbstoffen der DE-A-2 434 533 durch ein zu der neben der Azobrücke befindlichen Acylaminogruppe paraständiges Halogenatom bei gleichzeitiger Anwesenheit eines H-Atoms am Anilinstickstoff der Kupplungskomponente und eignen sich insbesondere zum Färben von Polyestermaterialien in orangefarbenen, roten, violetten oder blauen Tönen. Die Färbungen zeichnen sich durch gute Licht-, Naß- und Thermofixierechtheiten, klare Farbtöne und hohe Farbstärke aus. Das Ziehvermögen kann optimiert werden durch die Verwendung von Mischungen der anspruchsgemäßen Farbstoffe.

Beispiel 1

10 Teile 4-Nitro-anilin werden in 150 ml 2 n Salzsäure mit 5 Teilen Natriumnitrit bei 10-15 °C diazotiert. Nach ca. einstündigem Rühren wird die entstandene Lösung des Diazoniumsalzes filtriert und zu einer feinteiligen Suspension von 10 Teilen 4-Chlor-3-benzylamino-acetanilid und 10,5 Teilen 4-Chlor-3-(p-methylbenzylamino)-acetanilid in 200 ml Eiswasser bei max. 10 °C zugefügt. Die Mischung rührt bis zur Beendigung der Kupplung bei 5-10 °C. Der gebildete rote Niederschlag wird abgesaugt und getrocknet. Er stellt eine Mischung nachstehender Farbstoffe dar, die Polyestermaterialien in kräftigen, licht-, naß- und sublimierechten klaren Scharlachtönen färben :

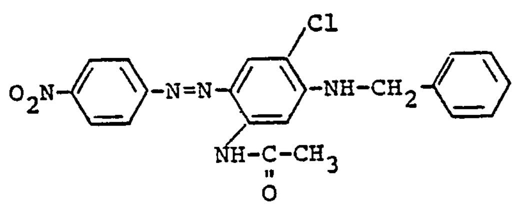

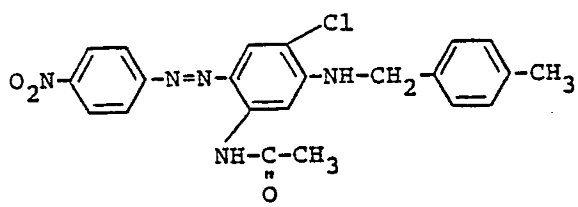

Vereinigt man in ähnlicher Weise die Lösungen oder Suspensionen der Diazoniumsalze der in der Spalte I der nachstehenden Tabelle angegebenen Amine mit den in der Spalte II aufgeführten Kupplungskomponenten, so erhält man Azofarbstoffe, die Polyethylenterephthalatfasern in den in Spalte III genannten Farbtönen mit ähnlichen Echtheiten färben.

| Beispiel Nr. | I | II | III |
|---|---|---|---|
| 2 | 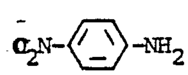 | 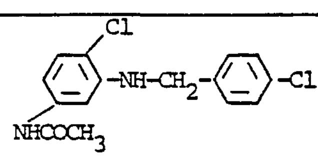 | scharlach |
| 3 | 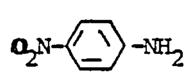 | 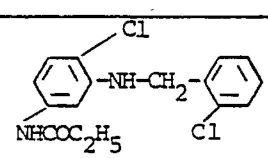 | scharlach |

(Fortsetzung)

| Beispiel Nr. | I | II | III |
|---|---|---|---|
| 4 | 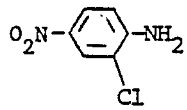 | 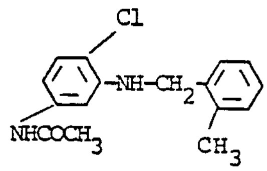 | rot |
| 5 | 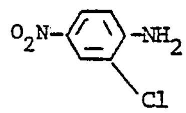 | 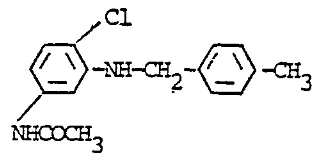 | rot |
| 6 | 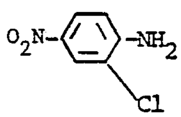 | 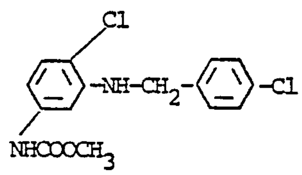 | rot |
| 7 | 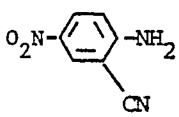 | 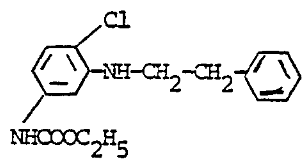 | rubin |
| 8 | 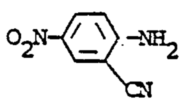 | 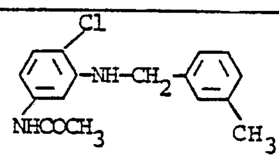 | rubin |
| 9 | 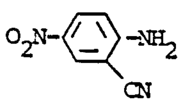 | 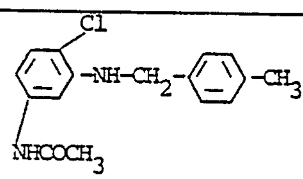 | rubin |
| 10 | 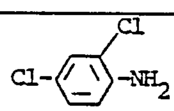 | 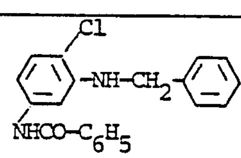 | orange |
| 11 | 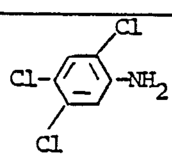 | 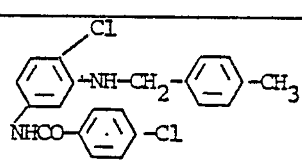 | orange |
| 12 | 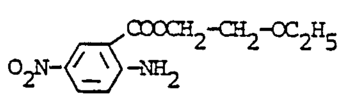 | 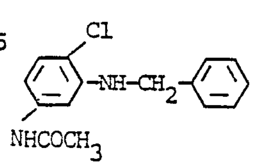 | scharlach |

(Fortsetzung)

| Beispiel Nr. | I | II | III |
|---|---|---|---|
| 13 | 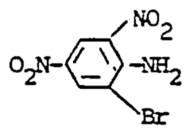 | 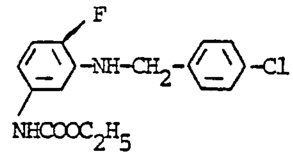 | rotviolett |
| 14 | 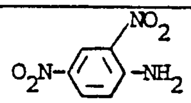 | 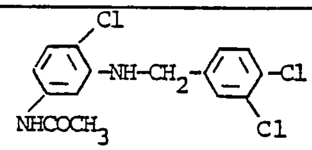 | rot |
| 15 | 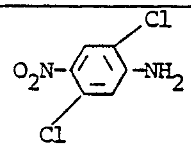 | 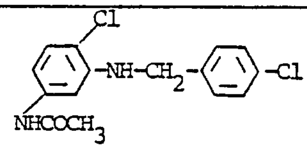 | rot |
| 16 | 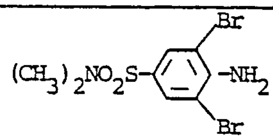 | 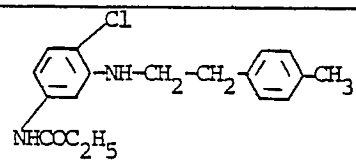 | orange |
| 17 | 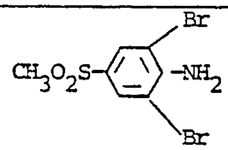 | 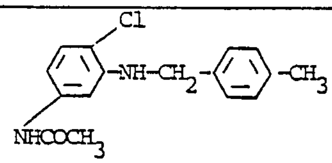 | orange |
| 18 | 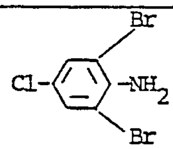 | 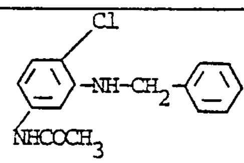 | orange |
| 19 | 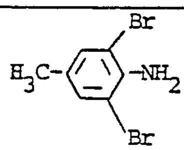 | 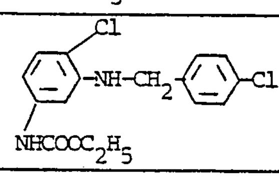 | orange |
| 20 | 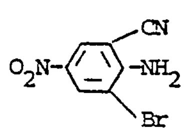 | 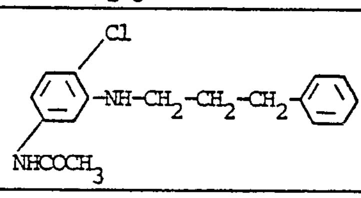 | rotviolett |

Beispiel 21

21,6 Teile des 2,6-Dibrom-Farbstoffs der Formel

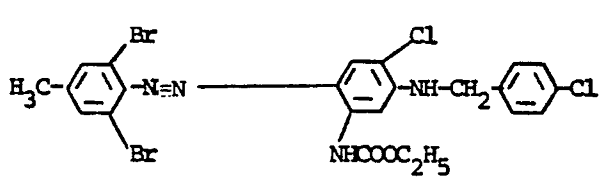

werden in einer Mischung aus 60 Teilen Dimethylformamid und 6 Teilen Pyridin mit 7,8 Teilen Kupfer(I)-cyanid 1 Stunde auf 100 °C erwärmt. Nach dem Abkühlen werden 80 Teile Methanol und 16 Teile Eisen(III)-chlorid zugefügt und die Mischung mehrere Stunden gerührt. Der erhaltene Niederschlag wird abgesaugt, gewaschen und getrocknet. Er stellt ein rotes Pulver dar, das Polyethylenterephthalatfasern in

brillanten, licht-, sublimier- und naßechten roten Tönen färbt und nachstehende Konstitution besitzt :

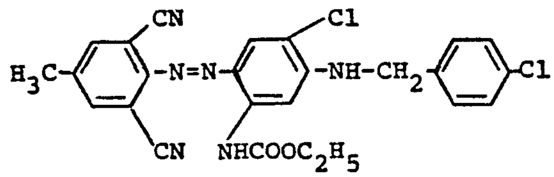

Die in der nachstehenden Tabelle aufgeführten Produkte, die Polyestermaterialien in den genannten Tönen färben, erhält man in ähnlicher Weise, wenn man die entsprechenden 2-Brom- bzw. 2,6-Dibromazofarbstoffe mit CuCN umsetzt.

| Beispiel-Nr. | Farbstoff der Formel | Farbton |
|---|---|---|
| 22 | 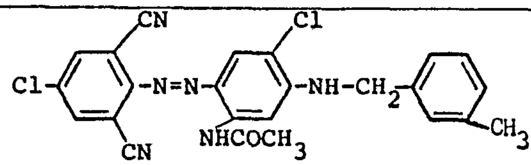 | -rot |
| 23 | 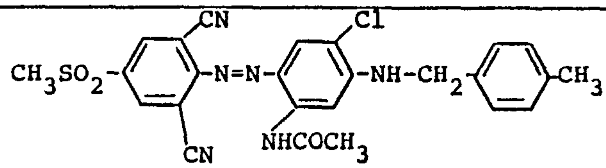 | rot-violett |
| 24 | 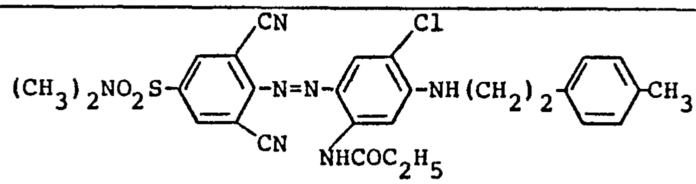 | rot-violett |
| 25 | 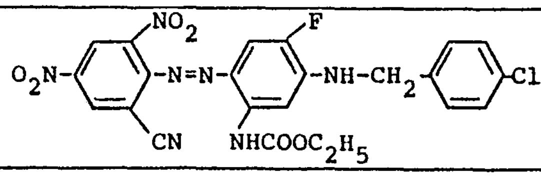 | violett |
| 26 | 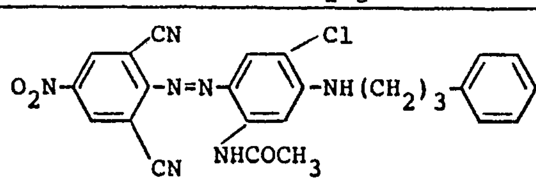 | violett |
| 27 | 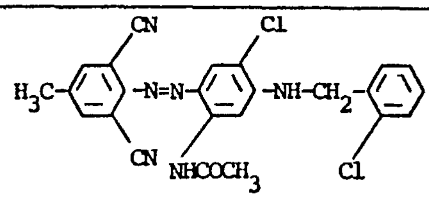 | rot |
| 28 | 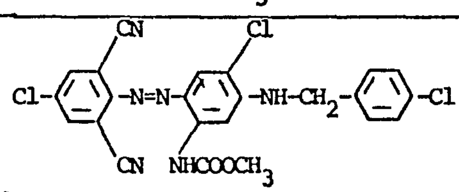 | rot |
| 29 | 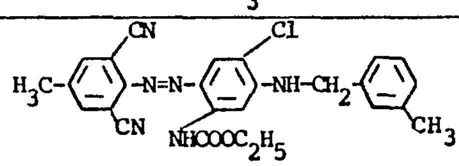 | |

**Ansprüche**

1. Azofarbstoffe der Formel

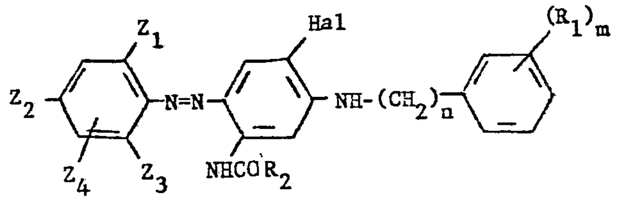

(I)

worin

n und m die Zahlen 1, 2 oder 3,

$Z_1$-$Z_4$ Wasserstoff, Alkyl, Cycloalkyl, Aralkyl, Halogen, —CN, —$NO_2$, —$CF_3$, —$SO_2Q$, $SO_2NVW$, —COW, CONVW, —$CO_2W$, —OQ, —NVW, —NWCOW, —$NWSO_2Q$, $NHCO_2Q$,

$Z_2$ außerdem Arylazo,

$Z_3$ mit $Z_4$ gemeinsam die restlichen Glieder eine ankondensierten Heterocyclus, wie

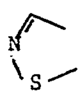 oder 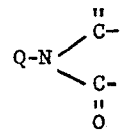

bilden können, wobei

Q Alkyl, Aralkyl oder Aryl,

V H, Alkyl oder Aryl und

W V oder Aryl bedeuten,

$R_1$ Alkyl, Cycloalkyl, Halogen oder Wasserstoff,

$R_2$ Wasserstoff, $R_3$ $OR_3$ oder $NHR_3$,

$R_3$ gegebenenfalls substituiertes Alkyl, Alkenyl, Aryl oder Hetaryl bedeuten,

wobei die vorstehend genannten Alkylreste 1-10 C-Atome aufweisen und durch Phenyl, Halogen, CN, Alkoxy, OH substituiert sein können, die Alkoxyreste 1-4 C-Atomen aufweisen, die Alkenylreste 3-5 C-Atome aufweisen, die Aralkylreste Phenyl-$C_1C_4$-alkylreste sind, die Arylreste Phenylreste sind, die 1-4fach durch Halogen, Alkoxy oder Alkyl, sowie 1-2fach durch $NO_2$, CN, $SO_2Q$, $SO_2NVW$, COW, $CO_2Q$, Aryl, Aryloxy, NVW oder Arylazo substituiert sein können, Hal für F, Cl oder Br steht und die Verbindung der Formel

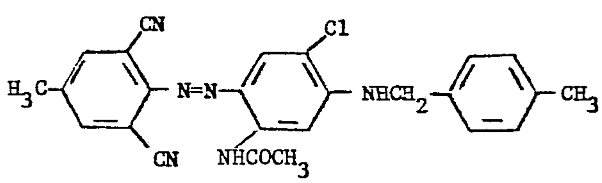

ausgenommen ist.

2. Azofarbstoffe gemäß Anspruch 1, worin

Hal Cl oder Br

$R_1$ H, $CH_3$, Cl,

$R_2$ n-$C_1$-$C_4$-Alkyl,

$Z_1$ H, —$NO_2$—, —CN, —Br, —$SO_2$—$C_1$-$C_4$-Alkyl, $CF_3$ oder —$CO_2$—$C_1$-$C_4$-Alkyl,

$Z_2$ $Z_1$, $C_1$-$C_4$-Alkyl oder Phenylazo,

$Z_3$ $Z_1$ oder H,

$Z_4$ H, $C_1$-$C_2$-Alkyl oder Cl bedeuten.

3. Azofarbstoffe gemäß Anspruch 1 der Formel

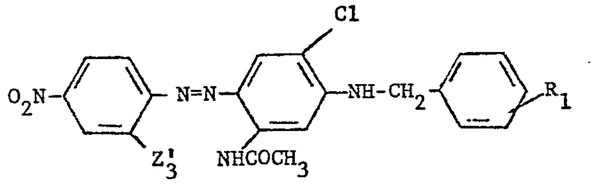

. (II)

worin

$R_1$ H, $CH_3$ oder Cl und

$Z_3'$ H, Cl, $NO_2$, CN, $-CO_2$-Alkyl ($C_1$-$C_4$) bedeuten.

4. Azofarbstoffe gemäß Anspruch 1 der Formel

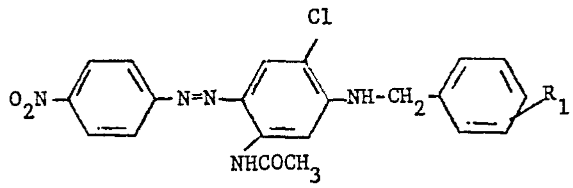

5. Azofarbstoff gemäß Anspruch 1 der Formel

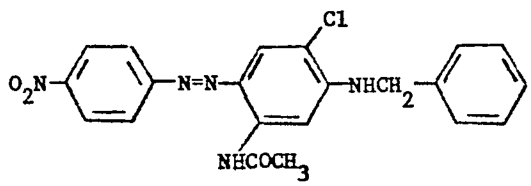

6. Mischungen der Farbstoffe gemäß Anspruch 4.

7. Verfahren zur Herstellung von Azofarbstoffen gemäß Anspruch 1, dadurch gekennzeichnet, daß man diazotierte aromatische Amine der Formel

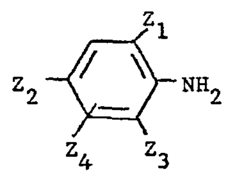

mit Kupplungskomponenten der Formel

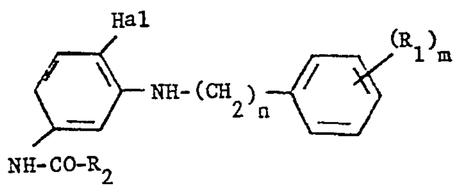

worin die Reste die in Anspruch 1 genannte Bedeutung haben, vereinigt.

8. Verfahren zum Färben und/oder Bedrucken von Fasermaterialien, dadurch gekennzeichnet, daß man Azofarbstoffe gemäß Anspruch 1 verwendet.

**Claims**

1. Azo dyestuffs of the formula

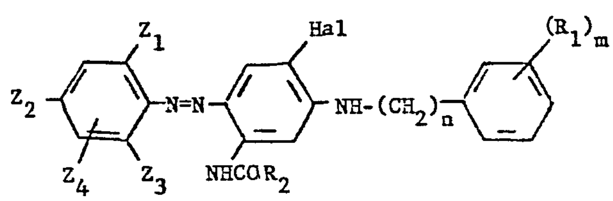 (I)

wherein

n and m denote the number 1, 2 or 3,

$Z_1$-$Z_4$ denote hydrogen, alkyl, cycloalkyl, aralkyl, halogen, —CN, $-NO_2$, $-CF_3$, $-SO_2Q$, $SO_2NVW$, —COW, CONVW, $-CO_2W$, —OQ, —NVW, —NWCOW, $-NWSO_2Q$, or $NHCO_2Q$,

$Z_2$ also denotes arylazo,

$Z_3$ and $Z_4$ can together form the remaining members of a fused-on heterocyclic radical, such as

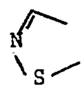 or 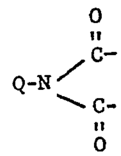

wherein

Q denotes alkyl, aralkyl or aryl,

V denotes H, alkyl or aryl and

W denotes V or aryl,

$R_1$ denotes alkyl, cycloalkyl, halogen or hydrogen.

$R_2$ denotes hydrogen, $R_3$, $OR_3$ or $NHR_3$,

$R_3$ denotes optionally substituted alkyl, alkenyl, aryl or hetaryl,

and wherein the above-mentioned alkyl radicals contain 1-10 C atoms and can be substituted by phenyl, halogen, CN, alkoxy, or OH, the alkoxy radicals contain 1-4 C atoms, the alkenyl radicals contain 3-5 C atoms, the aralkyl radicals are phenyl-$C_1$-$C_4$-alkyl radicals, the aryl radicals are phenyl radicals which can be mono-, di-, tri-, or tetra-substituted by halogen, alkoxy or alkyl or mono- or di-substituted by $NO_2$, CN, $SO_2Q$, $SO_2NVW$, COW, $CO_2Q$, aryl, aryloxy, NVW or arylazo, Hal represents F, Cl or Br and the compound of the formula

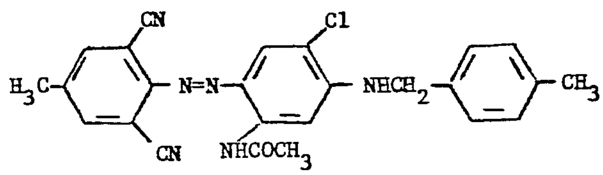

is excluded.

2. Azo dyestuffs according to Claim 1, wherein

Hal denotes Cl or Br,

$R_1$ denotes H, $CH_3$ or Cl,

$R_2$ denotes n-$C_1$-$C_4$-alkyl,

$Z_1$ denotes H, —$NO_2$—, —CN, —Br, —$SO_2$—$C_1$-$C_4$-alkyl, $CF_3$ or —$CO_2$—$C_1$-$C_4$-alkyl,

$Z_2$ denotes $Z_1$, $C_1$-$C_4$-alkyl or phenylazo,

$Z_3$ denotes $Z_1$ or H and

$Z_4$ denotes H, $C_1$-$C_2$-alkyl or Cl.

3. Azo dyestuffs according to Claim 1 of the formula

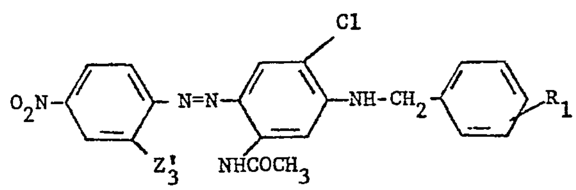 (II)

wherein

$R_1$ denotes H, $CH_3$ or Cl and

$Z_3'$ denotes H, Cl, $NO_2$, CN or —$CO_2$—$C_1$-$C_4$-alkyl.

4. Azo dyestuffs according to Claim 1 of the formula

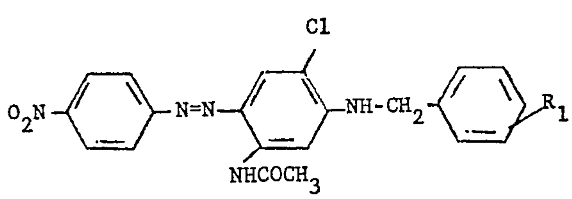

5. Azo dyestuffs according to Claim 1 of the formula

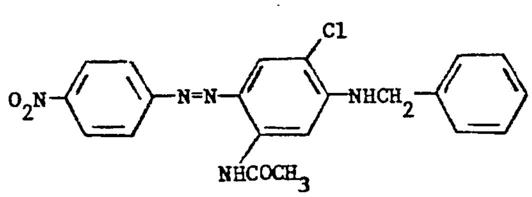

6. Mixtures of the dyestuffs according to Claim 4.

7. Process for the preparation of azo dyestuffs according to Claim 1, characterised in that diazotised aromatic amines of the formula

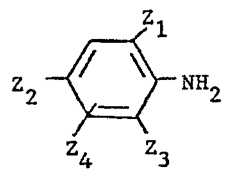

are combined with coupling components of the formula

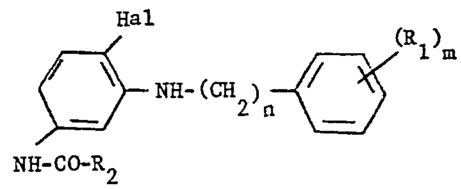

wherein the radicals have the meaning given in Claim 1.

8. Process for dyeing and/or printing fibre materials, characterised in that azo dyestuffs according to Claim 1 are used.

**Revendications**

1. Colorants azoïques de formule

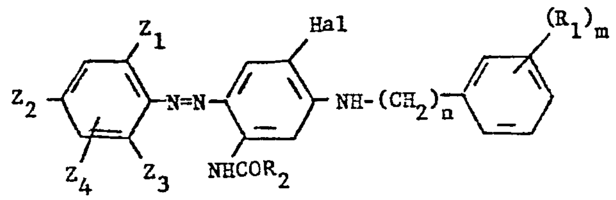

(I)

dans laquelle

n et m représentent les nombres 1, 2 ou 3,

$Z_1$ à $Z_4$ représentent l'hydrogène ou un halogène, alkyle, cycloalkyle, arylalkyle, —CN, $—NO_2$, $—CF_3$, $—SO_2Q$, $SO_2NVW$, —COW, —CONVW, $—CO_2W$, —OQ, —NVW, —NWCOW, $—NWSO_2Q$, $NHCO_2Q$,

$Z_2$ représente en outre arylazo,

$Z_3$ et $Z_4$ peuvent former ensemble des chaînons restants d'un hétérocycle condensé comme

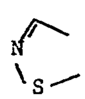

ou

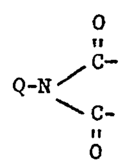

dans lesquels

Q représente alkyle, arylalkyle ou aryle

V représente H, alkyle ou aryle, et

W représente V ou aryle

$R_1$ représente alkyle, cycloalkyle, un halogène ou l'hydrogène,

$R_2$ représente l'hydrogène, $R_3$, $OR_3$ ou $NHR_3$,

$R_3$ représente alkyle éventuellement substitué, alcényle, aryle ou hétéroaryle,

les restes alkyles mentionnés précédemment présentant 1 à 10 atomes de carbone et pouvant être substitués par phényle, halogène, CN, alcoxy, OH, les restes alcoxy sont en $C_1$-$C_4$, les restes alcényles en $C_3$-$C_5$, les restes arylalkyles sont des restes phényl-alkyles en $C_1$-$C_4$, les restes aryles des restes phényles qui peuvent être substitués 1 à 4 fois par halogène, alcoxy ou alkyle et 1 ou 2 fois par $NO_2$, CN, $SO_2Q$, $SO_2NVW$, COW, $CO_2Q$, aryle, aryloxy, NVW ou arylazo, Hal représente F, Cl ou Br, à l'exclusion du composé de formule

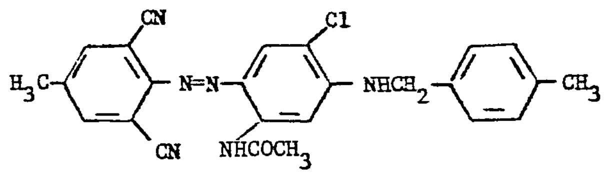

2. Colorants azoïques selon la revendication 1, catactérisé en ce que
Hal représente Cl ou Br,
$R_1$ représente H, $CH_3$, Cl,
$R_2$ représente n-alkyle en $C_1$-$C_4$,
$Z_1$ représente H, —$NO_2$, —CN, —Br, —$SO_2$—alkyle en $C_1$-$C_4$, $CF_3$ ou —$CO_2$—alkyle en $C_1$-$C_4$,
$R_2$ représente $Z_1$, alkyle en $C_1$-$C_4$ ou phénylazo,
$Z_3$ représente $Z_1$ ou $H_1$,
$Z_4$ représente H, alkyle en $C_1$ ou $C_2$ ou Cl.

3. Colorants azoïques selon la revendication 1 de formule

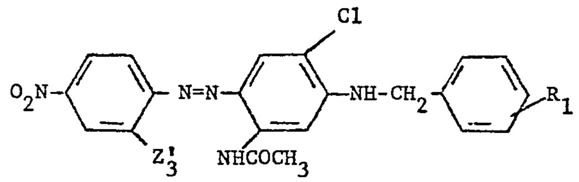 (II)

dans laquelle
$R_1$ représente H, $CH_3$ ou Cl, et
$Z_3'$ représente H, Cl, $NO_2$, CN, —$CO_2$—alkyle en $C_1$-$C_4$.

4. Colorants azoïques selon la revendication 1 de formule

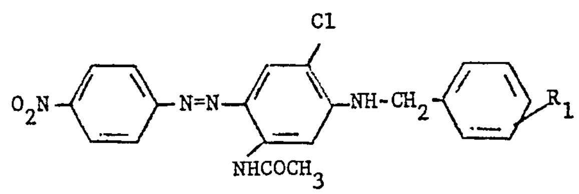

5. Colorants azoïques selon la revendication 1 de formule

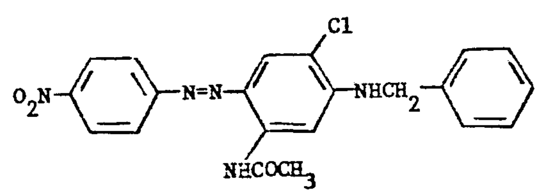

6. Mélanges des colorants selon la revendication 4.

7. Procédé pour la fabrication de colorants azoïques selon la revendication 1, caractérisé en ce que l'on combine des amines azomatiques de formule

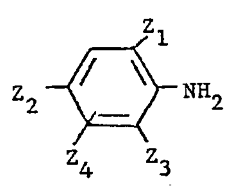

diazotées avec des composants de copulation de formule

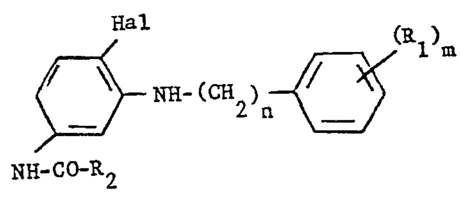

dans laquelle les restes ont la signification indiquée dans la revendication 1.

8. Procédé pour la teinture et/ou l'impression de matières fibreuses, caractérisé en ce que l'on utilise des colorants azoïques selon la revendication 1.